# EUROPÄISCHE PATENTSCHRIFT

(11) **EP 3 704 333 B1**
(45) Veröffentlichungstag und Bekanntmachung des Hinweises auf die Patenterteilung: **19.07.2023**
(21) Anmeldenummer: 17828928.6
(22) Anmeldetag: 27.12.2017
(51) Int. Cl.: E04H 12/08

(54) **VERFAHREN ZUM ERRICHTEN EINES TURMS MIT EINER MEHRTEILIGEN TURMSEKTION**
METHOD FOR ERECTING A TOWER COMPRISING A MULTI-PART TOWER SECTION
PROCÉDÉ D'ÉDIFICATION D'UNE TOUR AYANT UNE SECTION DE TOUR EN PLUSIEURS PARTIES

(30) Priorität: 03.11.2017 DE 102017125716
(43) Veröffentlichungstag der Anmeldung: 09.09.2020
(73) Patentinhaber: eno energy systems GmbH, 18055 Rostock (DE)
(72) Erfinder: PORM, Karsten, 18236 Kröpelin (DE); BOCKHOLT, Stefan, 18255 Kühlungsborn (DE); AHRENS, Robin, 18057 Rostock (DE); HEIN, Robert, 18057 Rostock (DE); BULL, Michael, 18198 Kritzmow OT Groß Schwaß (DE)
(74) Vertreter: 2SPL Patentanwälte PartG mbB
(86) Internationale Anmeldenummer: PCT/EP2017/084672
(87) Internationale Veröffentlichungsnummer: WO 2019/086137

(56) Entgegenhaltungen:
- EP-A1- 3 208 404
- WO-A1-01/94249
- WO-A1-2005/095792
- WO-A1-2014/086170
- WO-A1-2015/158349
- WO-A1-2016/055071
- WO-A2-2011/032559
- DE-A1- 2 724 398
- DE-A1- 2 724 398
- DE-A1-102012 202 979
- DE-A1-102015 115 645
- DE-A1-102015 211 269
- DE-A1-102016 203 526
- US-A1- 2003 147 753

## Beschreibung

### Technisches Gebiet

Ausführungsbeispiele befassen sich mit Verfahren zum Errichten eines Turms mit einer mehrteiligen Turmsektion.

### Hintergrund

Die für einen wirtschaftlichen Betrieb von On-Shore Windenergieanlagen WEA benötigten großen Nabenhöhen (z.B. >130m), erfordern für die Türme dieser WEA's in Stahlbauweise große Turmfußdurchmesser. Die Transportrahmenbedingungen (z.B. Durchfahrtshöhen) an Land beschränken die maximal möglichen Durchmesser für Turmsektionen auf 4,4 m. Eine Möglichkeit stellen Turmsektionen in längsgeteilter Bauweise dar. Diese ermöglichen Turmfußdurchmesser größer 4,4 m ohne die bestehenden Rahmenbedingungen für den Transport zu überschreiten. Neben den fertigungs- und nachweistechnischen Herausforderungen die eine Längsteilung von Turmsektionen mit sich bringt, entstehen bei der Montage und Errichtung dieser Sektionen neue Herausforderungen.

Die Druckschrift EP 3208404 A1 beschreibt ein Verfahren zur Montage eines Rorhrturmsegments und die Druckschrift DE 102015211269 A1 offenbart einen Windenergieanlagenturm. Ferner beschreibt die Druckschrift DE 102015115645 A1 ein Verfahren zur Herstellung und zum Errichten eines Rohrturmbauwerks.

### Zusammenfassung

Es besteht ein Bedarf ein Konzept für Türme mit mehrteiligen Turmsektionen zu schaffen, dass eine kostengünstigere und/oder schnellere Errichtung eines Turms ermöglicht.

Dieser Bedarf könnte durch den Gegenstand einer der vorliegenden Ansprüche gedeckt werden.

Einige Ausführungsbeispiele beziehen sich auf ein Verfahren zum Errichten eines Turms mit einer mehrteiligen Turmsektion. Die mehrteilige Turmsektion weist zumindest zwei Teilsektionen auf und die Teilsektionen sind kegelstumpfmantelsegmentförmig oder zylindermantelsegmentförmig. Das Verfahren umfasst ein Positionieren einer ersten Teilsektion der mehrteiligen Turmsektion an einer für die erste Teilsektion vorgesehenen Position und ein Verbinden eines Querflansches der ersten Teilsektion mit einem Fundament des Turms oder einer tieferliegenden Turmsektion. Ferner umfasst das Verfahren ein Positionieren einer zweiten Teilsektion der mehrteiligen Turmsektion angrenzend an die erste Teilsektion nach dem Verbinden des Querflansches und ein Verbinden eines Längsflansches der ersten Teilsektion mit einem Längsflansch der zweiten Teilsektion nach dem Positionieren der zweiten Teilsektion.

Es wird eine nicht beanspruchte Teilsektion einer mehrteiligen Turmsektion eines Turms offenbart.

Die Teilsektion umfasst ein Schalensegment der Teilsektion und einen bei einer ersten Längskante des Schalensegments befestigten ersten Längsflansch. Ferner umfasst die Teilsektion einen bei einer zweiten, gegenüberliegenden Längskante des Schalensegments befestigten zweiten Längsflansch und eine Verstrebungsstruktur, die mit einem dem ersten Längsflansch nahen Bereich und einem dem zweiten Längsflansch nahen Bereich verbunden ist. Die Verstrebungsstruktur ist ausgelegt, um eine Zugspannung aufzunehmen, um Verformung zu reduzieren.

Es wird auch eine weitere nicht beanspruchte Teilsektion einer mehrteiligen Turmsektion eines Turms offenbart.

Die Teilsektion umfasst ein Stahlschalensegment der Teilsektion. Das Stahlschalensegment bildet eine Halbschale der mehrteiligen Turmsektion. Ferner weist das Stahlschalensegment eine Dicke von mehr als 45 mm auf. Zusätzlich umfasst die Teilsektion zumindest einen bei einer Längskante des Stahlschalensegments befestigten Längsflansch zum Verbinden mit einem Längsflansch einer weiteren Teilsektion der mehrteiligen Turmsektion, die die zweite Halbschale der mehrteiligen Turmsektion bildet.

### Figurenkurzbeschreibung

Einige Beispiele von Vorrichtungen und/oder Verfahren werden nachfolgend bezugnehmend auf die beiliegenden Figuren lediglich beispielhaft näher erläutert. Es zeigen:
- Fig. 1: zeigt ein Flussdiagramm eines Verfahrens zum Errichten eines Turms mit einer mehrteiligen Turmsektion;
- Fig. 2: zeigt eine schematische Darstellung einer Teilsektion mit Verstrebungsstruktur,
- Fig. 3: zeigt eine schematische Darstellung einer Teilsektion, die eine Halbschale einer mehrteiligen Turmsektion bildet;
- Fig. 4: zeigt eine schematische Darstellung einer Teilsektion; und
- Fig. 5: zeigt einen schematischen Querschnitt einer Windenergieanlage.

### Beschreibung

Verschiedene Beispiele werden nun ausführlicher Bezug nehmend auf die beiliegenden Figuren beschrieben, in denen einige Beispiele dargestellt sind. In den Figuren können die Stärken von Linien, Schichten und/oder Bereichen zur Verdeutlichung übertrieben sein.

Während sich weitere Beispiele für verschiedene Modifikationen und alternative Formen eignen, sind dementsprechend einige bestimmte Beispiele derselben in den Figuren gezeigt und werden nachfolgend ausführlich beschrieben. Allerdings beschränkt diese detaillierte Beschreibung weitere Beispiele nicht auf die beschriebenen bestimmten Formen. Weitere Beispiele können alle Modifikationen, Entsprechungen und Alternativen abdecken, die in den Rahmen der Offenbarung fallen. Gleiche Bezugszeichen beziehen sich in der gesamten Beschreibung der Figuren auf gleiche oder ähnliche Elemente, die bei einem Vergleich miteinander identisch oder in modifizierter Form implementiert sein können, während sie die gleiche oder eine ähnliche Funktion bereitstellen.

Es versteht sich, dass, wenn ein Element als mit einem anderen Element "verbunden" oder "gekoppelt" bezeichnet wird, die Elemente direkt, oder über ein oder mehrere Zwischenelemente, verbunden oder gekoppelt sein können. Wenn zwei Elemente A und B unter Verwendung eines "oder" kombiniert werden, ist dies so zu verstehen, dass alle möglichen Kombinationen offenbart sind, d. h. nur A, nur B sowie A und B. Eine alternative Formulierung für die gleichen Kombinationen ist "zumindest eines von A und B". Das Gleiche gilt für Kombinationen von mehr als 2 Elementen.

Die Terminologie, die hier zum Beschreiben bestimmter Beispiele verwendet wird, soll nicht begrenzend für weitere Beispiele sein. Wenn eine Singularform, z. B. "ein, eine" und "der, die, das" verwendet wird und die Verwendung nur eines einzelnen Elements weder explizit noch implizit als verpflichtend definiert ist, können weitere Beispiele auch Pluralelemente verwenden, um die gleiche Funktion zu implementieren. Wenn eine Funktion nachfolgend als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei Gebrauch das Vorhandensein der angegebenen Merkmale, Ganzzahlen, Schritte, Operationen, Prozesse, Elemente, Komponenten und/oder einer Gruppe derselben präzisieren, aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

Sofern nicht anderweitig definiert, werden alle Begriffe (einschließlich technischer und wissenschaftlicher Begriffe) hier in ihrer üblichen Bedeutung auf dem Gebiet verwendet, zu dem Beispiele gehören.

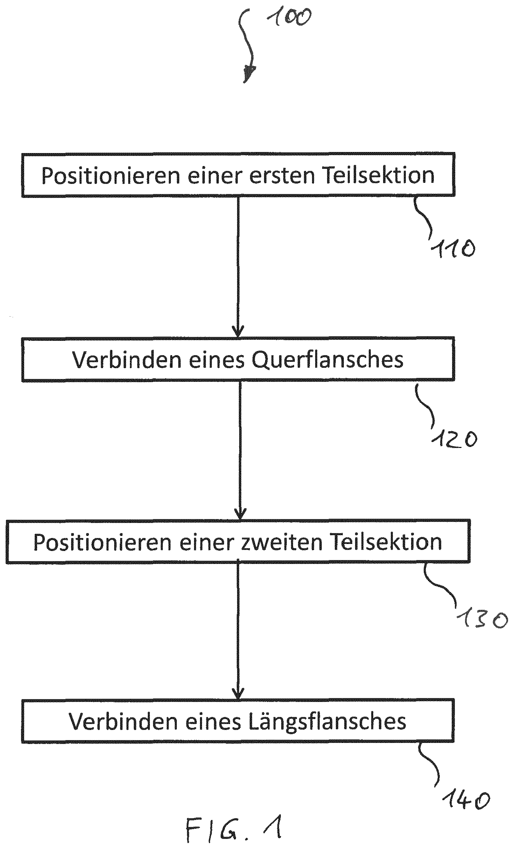

Fig. 1 zeigt ein Flussdiagramm eines Verfahrens 100 zum Errichten eines Turms mit einer mehrteiligen Turmsektion entsprechend eines Ausführungsbeispiels. Die mehrteilige Turmsektion weist zumindest zwei Teilsektionen auf und die Teilsektionen sind kegelstumpfmantelsegmentförmig oder zylindermantelsegmentförmig. Das Verfahren 100 umfasst ein Positionieren 110 einer ersten Teilsektion der mehrteiligen Turmsektion an einer für die erste Teilsektion vorgesehenen Position und ein Verbinden 120 eines Querflansches der ersten Teilsektion mit einem Fundament des Turms oder einer tieferliegenden Turmsektion. Ferner umfasst das Verfahren 100 ein Positionieren 130 einer zweiten Teilsektion der mehrteiligen Turmsektion angrenzend an die erste Teilsektion nach dem Verbinden 120 des Querflansches der ersten Teilsektion und ein Verbinden 140 eines Längsflansches der ersten Teilsektion mit einem Längsflansch der zweiten Teilsektion nach dem Positionieren 130 der zweiten Teilsektion.

Durch das aufeinanderfolgende Aufstellen der Teilsektionen an den dafür vorgesehenen Positionen vor dem Verbinden der Teilsektionen miteinander kann das zu hebende maximale Gewicht deutlich reduziert werden, im Vergleich zu einem Positionieren der gesamten mehrteilige Turmsektion nach einem Verbinden der Teilsektionen. Dadurch können z.B. günstigere Kräne verwendet und/oder weniger Zeit zum Umbau von Kränen benötigt werden. Ferner kann beispielsweise eine Teilsektion bereits Positioniert werden, während eine andere noch für das Positionieren vorbereitet oder geliefert wird. Dadurch kann an mehreren Teilsektionen parallel gearbeitet werden. Insgesamt kann dadurch eine kostengünstigere und/oder schnellere Errichtung des Turms ermöglicht werden.

Das Positionieren 110 der ersten Teilsektion wird beispielsweise durch ein Anheben und Bewegen der ersten Teilsektion mit Hilfe einer Hebevorrichtung, wie z.B. einem Kran, von einem Transportmittel (z.B. Transport-LKW) oder einem Lagerplatz in der Nähe der zur Turmerrichtung vorgesehenen Stelle auf die für die erste Teilsektion vorgesehene Position durchgeführt. Die für die erste Teilsektion vorgesehene Position ist beispielsweise jene Stelle an dem zu errichtenden Turm, an dem die erste Teilsektion im fertigen Zustand des Turms angeordnet sein soll. Beispielsweise kann die erste Teilsektion mittels an einem Teilringflansch der ersten Teilsektion angebrachten Anschlagmitteln in die Senkrechte gebracht werden.

Danach wird die erste Teilsektion mit einem Fundament des Turms oder einer tieferliegenden Turmsektion (z.B. Stahlturmsektion oder Betonturmsektion) verbunden 120, sodass der Kran danach von der ersten Teilsektion gelöst werden kann und somit für das Bewegen von anderen Teilen verwendet werden kann.

Ferner kann beispielsweise zum Positionieren der ersten Teilsektion ein Kran verwendet werden, der eine maximale Tragkraft hat, die geringer als ein Gewicht der mehrteiligen Turmsektion ist (oder geringer als 60% des Gewichts der mehrteiligen Turmsektion). Dies kann ermöglicht werden, indem die mehrteilige Turmsektion nicht zuerst zusammengebaut und dann als Ganzes an die vorgesehene Turmposition gehoben wird, sondern eine Teilsektion nach der anderen auf die dafür vorgesehenen Positionen gehoben werden.

Zusätzlich oder alternativ kann auch ein Kran zum Positionieren von Teilsektionen von unteren Turmsektionen des Turms verwendet werden, der eine maximale Hubhöhe hat, die ausreicht, um den gesamten Turm, z.B. inklusive einer Rotorblattmontage einer Windenergieanlage, zu errichten ohne den Kran auf unterschiedliche maximale Hubhöhen umbauen zu müssen. Für die Errichtung einer gesamten Windenergieanlage kann der Kran beispielsweise eine Hakenhöhe, z.B. für die Rotorblattmontage, von ca.15-20m höher aufweisen, als nur für die Turmerrichtung notwendig wäre. Z.B. kann der zum Positionieren der ersten Teilsektion verwendete Kran eine maximale Hubhöhe haben, die größer als eine maximale Höhe des zu errichtenden Turms oder der zu errichtenden Windenergieanlege ist. Beispielsweise kann der Kran während dem Positionieren 110 der ersten Teilsektion eine maximale Hubhöhe größer als 120m (oder mehr als 150m oder mehr als 180m) haben und die vorgesehene Position (z.B. der Oberkante oder der Unterkante) der ersten Teilsektion kann bei einer Höhe von weniger als 60m (oder weniger als 40m) liegen. Dies kann beispielsweise ermöglicht werden, da das Gewicht der einzelnen Teilsektionen deutlich geringer ist als das Gewicht der gesamten Turmsektion. Dadurch kann beispielsweise ein Umbau des Krans von einer niedrigen maximalen Hubhöhe zu einer größeren maximalen Hubhöhe vermieden werden und/oder der Bedarf an zwei unterschiedlichen Kränen vermieden werden. So können die Kosten und/oder die Zeit für das Errichten des Turms deutlich reduziert werden.

Das Verbinden 120 des Querflansches der ersten Teilsektion mit dem Fundament des Turms oder einer tieferliegenden Turmsektion erfolgt beispielsweise über Schraubverbindungen oder eine Schweißverbindung. Bildet die mehrteilige Turmsektion mit der ersten Teilsektion z.B. eine unterste Turmsektion des Turms, so kann die erste Teilsektion auf ein vorbereitetes Fundament des Turms gehoben werden, sodass aus dem Fundament hervorstehende Ankerstangen oder Gewindestangen beim Absetzen der ersten Teilsektion durch Bohrlöcher in dem Querflansch geführt werden. Die erste Teilsektion kann dann durch die Ankerstangen und Schrauben mit dem Fundament verbunden werden. Alternativ kann die erste Teilsektion auf einen Querflansch einer tieferliegenden Turmsektion aufgesetzt werden und der Querflansch der ersten Teilsektion mit einem Querflansch der tieferliegenden Turmsektion bspw. mit Schraubverbindungen oder einer Schweißverbindung verbunden werden.

Das Positionieren 130 der zweiten Teilsektion wird beispielsweise durch ein Anheben und Bewegen der zweiten Teilsektion mit Hilfe einer Hebevorrichtung, wie z.B. einem Kran, von einem Transportmittel (z.B. Transport-LKW) oder einem Lagerplatz in der Nähe der zur Turmerrichtung vorgesehenen Stelle auf die für die zweite Teilsektion vorgesehene Position neben der erstem Teilsektion durchgeführt. Die für die zweite Teilsektion vorgesehene Position ist beispielsweise jene Stelle an dem zu errichtenden Turm, an dem die zweite Teilsektion im fertigen Zustand des Turms angeordnet sein soll. Beispielsweise kann die zweite Teilsektion mittels an einem Teilringflansch der zweiten Teilsektion angebrachten Anschlagmitteln in die Senkrechte gebracht werden.

Die zweite Teilsektion kann optional mit Schräglage neben der ersten Teilsektion vorpositioniert werden und danach kann die zweite Teilsektion auf die erste Teilsektion ausgerichtet werden. Beispielsweise kann die Schräglage der zweiten Teilsektion derart sein, dass ein Winkel zwischen dem Längsflansch der ersten Teilsektion und dem Längsflansch der zweiten Teilsektion größer als 0,1° (oder größer als 0,5° oder größer als 1°) und/oder kleiner als 5° (oder kleiner als 2° oder kleiner als 1°) ist. Dadurch kann die zweite Teilsektion erst an einer Unterseite ausgerichtet und abgelassen werden bevor die zweite Teilsektion auch an der Oberseite ausgerichtet wird, sodass Beschädigungen an den Längsflanschen beim Absetzen reduziert oder vermieden werden können.

Wenn der Kran beispielsweise nach dem Positionieren 110 der ersten Teilsektion und dem Verbinden 120 des Querflansches der ersten Teilsektion mit einem Fundament des Turms oder einer tieferliegenden Turmsektion von der ersten Teilsektion gelöst wird, kann derselbe Kran bereits für die zweite Teilsektion verwendet werden, auch wenn noch Arbeiten an der bereits positionierten ersten Teilsektion erfolgen. In anderen Worten, das Positionieren 130 der zweiten Teilsektion kann ein Heben der zweiten Teilsektion mit demselben Kran umfassen. Dadurch kann z.B. die benötigte Zeit zum Errichten des Turms und/oder die benötigte Anzahl von Kränen oder benötigte Kranzeit reduziert werden.

Optional kann das Verfahren 100 ein Anbringen einer Positionierhilfsstruktur an einem oberen Querflansch der ersten Teilsektion und/oder einem oberen Querflansch der zweiten Teilsektion umfassen. Beim Positionieren 130 der zweiten Teilsektion kann die zweite Teilsektion auf die erste Teilsektion mit Hilfe der Positionierhilfsstruktur ausgerichtet werden. Alternativ oder zusätzlich kann eine Positionierhilfsstruktur an einem unteren Querflansch der ersten Teilsektion und/oder einem unteren Querflansch der zweiten Teilsektion befestigt werden. Die Positionierhilfsstruktur kann beispielsweise eine Metallstruktur sein, die an einem ersten Endbereich ein Lochbild aufweist, wie ein Lochbild am Endbereich des Querflansches der ersten Teilsektion, und die an einem zweiten Endbereich ein Lochbild aufweist, wie ein Lochbild am Endbereich des Querflansches der zweiten Teilsektion. Beispielsweise kann über Dorne, die durch die Löcher der Positionierhilfsstruktur und einen der Querflansche geführt werden, leicht erkannt werden, wann die Teilsektionen zueinander ausgerichtet sind. Die Positionierhilfsstruktur kann temporär angebracht sein und nach dem Verbinden 140 der Längsflansche wieder entfernt werden.

Das Verbinden 140 des Längsflansches der ersten Teilsektion mit dem Längsflansch der zweiten Teilsektion nach dem Positionieren 130 der zweiten Teilsektion kann beispielsweise über Schraubverbindungen oder eine Schweißverbindung erfolgen.

Zusätzlich kann ein Querflansch der zweiten Teilsektion mit einem Fundament des Turms oder einer tieferliegenden Turmsektion verbunden werden. Das Verbinden des Querflansches der zweiten Teilsektion mit dem Fundament des Turms oder einer tieferliegenden Turmsektion erfolgt beispielsweise über Schraubverbindungen oder eine Schweißverbindung. Bildet die mehrteilige Turmsektion mit der zweiten Teilsektion z.B. eine unterste Turmsektion des Turms, so kann die zweiten Teilsektion auf ein vorbereitetes Fundament des Turms gehoben werden, sodass aus dem Fundament hervorstehende Ankerstangen oder Gewindestangen beim Absetzen der zweiten Teilsektion durch Bohrlöcher in dem Querflansch geführt werden. Die zweite Teilsektion kann dann durch die Ankerstangen und Muttern mit dem Fundament verbunden werden. Alternativ kann die zweite Teilsektion auf einen Querflansch einer tieferliegenden Turmsektion aufgesetzt werden und der Querflansch der zweiten Teilsektion mit dem Querflansch der tieferliegenden Turmsektion mit Schraubverbindungen oder einer Schweißverbindung verbunden werden.

Die erste Teilsektion und/oder zweite Teilsektion kann optional zumindest eine Aufstiegshilfe oder Plattform bereits vor dem Positionieren der ersten Teilsektion und/oder zweite Teilsektion aufweisen. Beispielsweise kann die Aufstiegshilfe und/oder Plattform bereits im Werk vor Transport zum Errichtungsort an der ersten Teilsektion und/oder zweite Teilsektion befestigt werden. Beispielsweise kann eine Aufstiegshilfe (z.B. Leiter) entlang des Längsflansches der ersten Teilsektion und/oder zweite Teilsektion angeordnet sein.

Das Verfahren 100 umfasst ferner ein Erzeugen einer Mehrzahl von Höhenausgleichstrukturen vor dem Positionieren 110 der ersten Teilsektion.

Beispielsweise ist die mehrteilige Turmsektion eine unterste Turmsektion des Turms, deren Teilsektionen auf den Höhenausgleichstrukturen platziert werden. Die Höhenausgleichstrukturen sind voneinander beabstandet über einen Umfang eines Auflagebereichs der mehrteiligen Turmsektion verteilt angeordnet.

Die Höhenausgleichstrukturen können beispielsweise zueinander nivellierte Lastbleche aufweisen. Die Lastbleche können z.B. in feuchten Betonhaufen auf dem Fundament eingebettet werden. Die Betonhaufen können vor dem Positionieren 110 der ersten Teilsektion ausgehärtet sein, sodass die Lastbleche beim Draufstellen der Teilsektionen ihre Höhe halten. Beispielsweise wird die erste Teilsektion auf mindestens drei Höhenausgleichstrukturen gestellt und dann über den Querflansch (z.B. über Ankerstangen) mit dem Fundament verbunden.

Beispielsweise können Höhenausgleichstrukturen dimensioniert werden, sodass die Höhenausgleichstrukturen mehr Gewicht tragen können, als das Gewicht der mehrteiligen Turmsektion, sodass bereits mit einer zweiten Turmsektion begonnen werden kann bevor die Spalte zwischen den Höhenausgleichstrukturen verfüllt oder ausgehärtet sind. Z.B. kann die erste Teilsektion auf einer Teilmenge der Mehrzahl von Höhenausgleichstrukturen positioniert werden und die Teilmenge der Höhenausgleichstrukturen kann ausgelegt sein, um ein Gewicht von mehr als dem zweifachen (oder mehr als dem dreifachen) eines Gewichts der ersten Teilsektion zu tragen.

Zusätzlich kann das Verfahren 100 auch ein Verfüllen von Spalten zwischen den Höhenausgleichstrukturen nach dem Positionieren der zweiten Teilsektion mit Verfüllmaterial umfassen. Wie erwähnt, könnte zumindest eine Teilsektion einer zweiten Turmsektion oder eine ganze Turmsektion (z.B. ganze, mehrteilige Turmsektion oder ganze, ungeteilte Turmsektion, wie z.B. eine ungeteilte, konische oder zylindrische Stahlrohrsektion) auf der ersten mehrteiligen Turmsektion bereits während eines Aushärtens des Verfüllmaterials positioniert werden.

Zusätzlich zu den Höhenausgleichstrukturen kann eine temporäre Abspannung einer senkrecht errichteten Teilsektion mittels Abspannung erfolgen.

Optional kann das Verfahren 100 ferner ein Aufbringen eines Dichtungsmaterials (z.B. Dichtungsband) entlang des Längsflansches der ersten Teilsektion und/oder des Längsflansches der zweiten Teilsektion vor dem Positionieren 110 der ersten Teilsektion oder vor dem Positionieren 130 der zweiten Teilsektion. Das Dichtungsmaterial kann beispielsweise erst nach einem Anliefern der ersten und/oder zweiten Teilsektion aus dem Werk an den Errichtungsort erfolgen, um Beschädigungen des Dichtungsmaterials während des Transports zu vermeiden.

Optional kann das Verfahren 100 auch ein Aufstellen einer Tragstruktur für Elektrokomponenten (z.B. Transformator und/oder Steuergeräte) auf das Fundament innerhalb des Turms oder innerhalb der mehrteiligen Turmsektion, wenn die mehrteilige Turmsektion die unterste Turmsektion ist, umfassen. Beispielsweise kann die erste Teilsektion mit dem Fundament des Turms verbunden werden und danach oder davor ein Positionieren der Tragstruktur für Elektrokomponenten auf dem Fundament erfolgen, bevor eine letzte Teilsektion der mehrteiligen Turmsektion auf dem Fundament positioniert wird.

Der zu errichtende Turm umfasst beispielsweise eine Mehrzahl von Turmsektionen von denen zumindest eine Turmsektion oder zumindest zwei übereinander anzuordnende Turmsektionen mehrteilig sind. Eine Turmsektion ist beispielsweise ein Teil eines Turms, der einen Höhenabschnitt des Turms bildet. Eine Turmsektion ist z.B. ein Teil eines Turms, der eine Symmetrie bezüglicher einer im Wesentlichen vertikalen Turmachse aufweist. Beispielsweise kann die Turmsektion (z.B. die Schale der Turmsektion) eine zylindermantelförmige oder kegelstumpfmantelförmige Geometrie aufweisen.

Die mehrteilige Turmsektion des zu errichtenden Turms weist zumindest zwei Teilsektionen auf. Ferner umfasst die mehrteilige Turmsektion beispielsweise weniger als 9 oder weniger als 5 Teilsektionen. Beispielsweise kann ein Durchmesser der mehrteiligen Turmsektion größer als 4m (oder größer als 5m, größer als 6m oder größer als 8m) sein. Die mehrteilige Turmsektion kann eine symmetrische Teilung in Teilsektionen oder eine unsymmetrische Trennung aufweisen. Beispielsweise können zwei Teilsektionen Schalensegmente mit gleicher Kreisbogenlänge oder zwei Teilschalen mit unterschiedlichen Kreisbogenlängen oder Teilkreissehnen aufweisen.

Die Teilsektionen der mehrteiligen Turmsektion werden beispielsweise bei der Trennung einer Schale der Turmsektion in kleinere Teile erzeugt. Beispielsweise umfasst die erste Teilsektion und die zweite Teilsektion jeweils ein Segment der Schale der Turmsektion. Die Schalensegmente sind beispielsweise kegelstumpfmantelsegmentförmig (Geometrie eines Teils einer Mantelfläche eines Kegelstumpfes) oder zylindermantelsegmentförmig (Geometrie eines Teils einer Mantelfläche eines Zylinders). Ferner sind die Schalensegmente der ersten Teilsektion und der zweiten Teilsektion z.B. Stahlschalensegmente.

Das Schalensegment der ersten Teilsektion und/oder der zweiten Teilsektion umfasst beispielsweise zwei sich im Wesentlichen horizontal (oder orthogonal zu einer Turmachse oder Symmetrieachse der Turmsektion) erstreckende Querseiten oder Querkanten und zwei sich im Wesentlich orthogonal zu den Querseiten (z.B. im Wesentlichen vertikal oder in Richtung der Turmachse) erstreckende Längsseiten oder Längskanten. Die Längsseiten können z.B. für hohlzylinderförmige Turmsektionen im Wesentlichen parallel zu der Turmachse sein oder von der parallelen Richtung für hohlkegelstumpfförmige Turmsektionen leicht abweichen (z.B. weniger als 5°, weniger als 3° oder weniger als 1°). Das Schalensegment der ersten Teilsektion und/oder der zweiten Teilsektion ist beispielsweise Teil der Außenschale des Turms und kann z.B. aus Stahl gefertigt sein. Eine Querkante der ersten Teilsektion und/oder der zweiten Teilsektion und/oder eine Querkante des Schalensegments der ersten Teilsektion und/oder der zweiten Teilsektion kann beispielsweise eine Länge von mehr als 2,5 m (oder mehr als 5 m oder mehr als 8 m) aufweisen. Die Querkante entspricht beispielsweise der kreisbogenförmigen Kante am oberen oder unteren Ende einer Teilsektion und/oder am oberen oder unteren Ende des Schalensegments einer Teilsektion und die Länge der Querkante entspricht z.B. einer Länge der kreisbogenförmigen Kante. Die Längskante des Schalensegments der ersten Teilsektion und/oder der zweiten Teilsektion kann z.B. eine Länge von mehr als 5 m (oder mehr als 10 m oder mehr als 20 m) aufweisen. Entsprechend kann beispielsweise die erste Teilsektion und/oder die zweite Teilsektion eine Höhe von mehr als 5m (oder mehr als 10 m oder mehr als 20 m) aufweisen. Das Schalensegment der ersten Teilsektion und/oder der zweiten Teilsektion kann beispielsweise eine Dicke von mehr als 45 mm (oder mehr als 50 mm oder mehr als 55 mm) aufweisen.

Die erste Teilsektion und/oder die zweite Teilsektion umfassen beispielsweise jeweils einen Längsflansch entlang der Längskanten der Schalensegmente der ersten Teilsektion und/oder der zweiten Teilsektion. Die Längsflansche sind beispielsweise entlang der Längskanten, z.B. angrenzend an die Längskanten, befestigt (z.B. durch zumindest eine Schweißnaht). Die Längsflansche können an einer Außenseite oder an einer Innenseite der Schalensegmente der ersten Teilsektion und/oder der zweiten Teilsektion befestigt sein.

Beispielsweise können sich die Längsflansche der ersten Teilsektion und/oder der zweiten Teilsektion über die gesamten Längskanten der Schalensegmente der ersten Teilsektion und/oder der zweiten Teilsektion erstrecken. Alternativ kann ein Längsflansch kürzer als die Längskante eines Schalensegments sein, sodass sich zumindest an den Enden der Längskante kein Längsflansch erstreckt (z.B. entlang zumindest der letzten 10 cm, zumindest der letzten 30 cm oder zumindest der letzten 50 cm). Dadurch kann z.B. die Befestigung eines Querflansches entlang einer Querkante des Schalensegments der Teilsektionen erleichtert werden.

Die erste Teilsektion und/oder die zweite Teilsektion umfassen beispielsweise jeweils einen Querflansch entlang der Querkanten der Schalensegmente der ersten Teilsektion und/oder der zweiten Teilsektion. Die Querflansche sind beispielsweise kreissegmentförmig und entlang der Querkanten der Schalensegmente der ersten Teilsektion und/oder der zweiten Teilsektion befestigt. Beispielsweise kann an einer oberen Querkante des Schalensegments ein oberer Querflansch und an einer unteren Querkante des Schalensegments ein unterer Querflansch befestigt sein. Der Querflansch kann verwendet werden, um die Teilsektion mit einer anderen Turmsektion, einer Teilsektion einer anderen Turmsektion oder einem Fundament des Turms zu verbinden (z.B. über Schraubverbindungen).

Als Turm wird z.B. ein vertikal ausgerichtetes Bauwerk bezeichnet, beispielsweise für eine Windenergieanlage. Die Definition eines Turms enthält sowohl abgespannte als auch freistehende Konstruktionen und berücksichtigt somit auch Konstruktionen, die manchmal auch als Mast bezeichnet werden. Beispielsweise kann der Turm ein Turm einer Windenergieanlage sein.

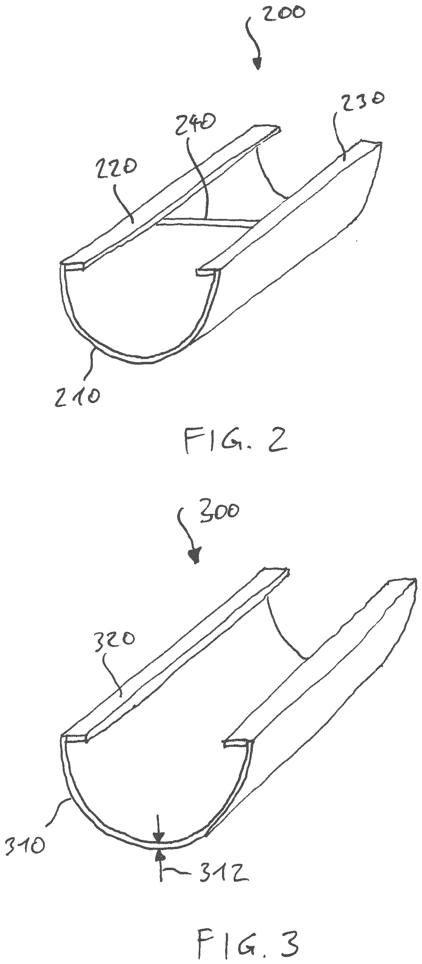

Fig. 2 zeigt eine schematische Darstellung einer Teilsektion mit Verstrebungsstruktur gemäß einem Ausführungsbeispiel. Die Teilsektion 200 ist eine Teilsektion einer mehrteiligen Turmsektion eines Turms. Die Teilsektion 200 umfasst ein Schalensegment 210 der Teilsektion 200 und einen bei einer ersten Längskante des Schalensegments 210 befestigten ersten Längsflansch 220. Ferner umfasst die Teilsektion 200 einen bei einer zweiten, gegenüberliegenden Längskante des Schalensegments 210 befestigten zweiten Längsflansch 230 und eine Verstrebungsstruktur 240, die mit einem dem ersten Längsflansch 220 nahen Bereich und einem dem zweiten Längsflansch 230 nahen Bereich verbunden ist. Die Verstrebungsstruktur 240 ist ausgelegt, um eine Zugspannung aufzunehmen, um Verformung zu reduzieren.

Die Verbindungsstruktur kann beispielsweise insbesondere in Wannenlage der Teilsektion verhindern, dass die Teilsektion zu viel von ihrer idealen Form abweicht. Durch die Verstrebungsstruktur kann bei Teilsektionen eine Verformung beim Transport und beim Errichten der Teilsektion gering gehalten werden. Dadurch kann beispielsweise die Errichtung des Turms erleichtert und/oder eine Beschädigung von bereits an der Teilsektion befestigten Einbauten reduziert oder vermieden werden.

Die Verstrebungsstruktur kann beispielsweise ein Metallzugstab sein, der in der Nähe der beiden Längskanten des Schalensegments der Teilsektion mit dem Schalensegment oder den Längsflanschen verbunden ist. Beispielsweise kann die Verstrebungsstruktur mit Verstrebungsbefestigungsstrukturen, die an dem Schalensegment oder den Längsflanschen befestigt (z.B. angeschweißt) sind, verbunden sein. Die Verstrebungsbefestigungsstrukturen sind beispielswiese weniger als 50cm (oder weniger als 30cm) von den Längskanten des Schalensegments der Teilsektion entfernt an dem Schalensegment oder den Längsflanschen befestigt.

Die Verstrebungsstruktur kann beispielsweise lediglich temporär eingebaut sein. Beispielsweise kann die Verstrebungsstruktur im Werk bei der Herstellung der Teilsektion eingebaut werden und nach dem Positionieren der Teilsektion an der vorgesehenen Stelle des zu errichtenden Turms und nach dem Verbinden der Längsflansche 140 wieder entfernt werden.

Der erste Längsflansch kann verwendet werden, um die (erste) Teilsektion mit einem Längsflansch einer zweiten Teilsektion der mehrteiligen Turmsektion zu verbinden, und der zweite Längsflansch kann verwendet werden, um die (erste) Teilsektion mit einem weiteren Längsflansch der zweiten Teilsektion oder einem Längsflansch einer dritten Teilsektion der mehrteiligen Turmsektion zu verbinden.

Optional kann die Teilsektion zusätzlich eine Aufstiegshilfe und/oder eine Plattform (z.B. als Standplatz für Arbeiter zum Errichten des Turms) umfassen, die an dem Schalensegment befestigt ist.

Beispielsweise kann das Schalensegment der Teilsektion eine Halbschale der mehrteiligen Turmsektion sein. Alternativ kann die mehrteilige Turmsektion auch mehr als zwei Teilsektionen aufweisen.

Weitere Einzelheiten und optionale Aspekte der Teilsektion 200 sind in Verbindung mit dem vorgeschlagenen Konzept oder einem oder mehreren der zuvor oder im Folgenden beschriebenen Beispiele beschrieben.

Fig. 3 zeigt eine schematische Darstellung einer Teilsektion, die eine Halbschale einer mehrteiligen Turmsektion bildet, gemäß einem Ausführungsbeispiel. Die Teilsektion 300 ist eine Teilsektion einer mehrteiligen Turmsektion eines Turms. Die Teilsektion 300 umfasst ein Stahlschalensegment 310 der Teilsektion 300. Das Stahlschalensegment 310 bildet eine Halbschale der mehrteiligen Turmsektion 300. Ferner weist das Stahlschalensegment 310 eine Dicke 312 von mehr als 45mm (oder mehr als 50mm oder mehr als 55mm) auf. Zusätzlich umfasst die Teilsektion 300 zumindest einen bei einer Längskante des Stahlschalensegments 310 befestigten Längsflansch 320 zum Verbinden mit einem Längsflansch einer weiteren Teilsektion der mehrteiligen Turmsektion, die die zweite Halbschale der mehrteiligen Turmsektion bildet.

Durch die Verwendung von Stahlschalensegmenten mit Dicken von mehr als 45mm in Kombination mit der Konstruktion einer Halbschale kann ermöglicht werden, dass es zu nur geringer Verformung bei der Herstellung und beim Transport der Teilsektion kommt, sodass die Turmsektion mit geringem Aufwand auf dem Fundament des Turms (z.B. auf Ankerstangen) oder auf einer tieferliegenden Turmsektion platziert und befestigt werden kann. Beispielsweise können Halbschalen gegenüber Drittelschalen ein um etwa den Faktor 8 größeres Widerstandsmoment gegen Biegung über die offene Seite aufweisen. Dies kann eine hohe Formstabilität bei der senkrechten Errichtung, insbesondere beim Aufrichten der Sektionsteile, ermöglichen. Ferner kann sich die Halbschalenform günstig auf die Windbelastung im Teilerrichtungszustand auswirken. Das Torsionswiderstandsmoment der Halbschale kann beispielsweise um etwa den Faktor 1,5 größer sein als bei Drittelschalen, wodurch eine Verwindung der Sektionsteile reduziert werden könnte. Dadurch kann z.B. die Montierbarkeit im senkrechten Zustand ermöglicht oder verbessert werden. Ferner kann durch Wandstärken ab 45mm, z.B. im unteren Bereich der geteilten Sektion, der Einbau einer Türöffnung ermöglicht werden und eine erhöhte Formstabilität gegen ein Aufklappen der Sektionen um die Längsachse erreicht werden. Ferner könnte eine Verformung von Einbauten (z.B. Plattformen) reduziert oder verhindert werden und die Montierbarkeit der Längsflansche und Aufsetzen auf Ankerbolzen verbessert werden.

Optional kann die Teilsektion 300 eine Aufstiegshilfe oder eine Plattform, die an dem Stahlschalensegment befestigt ist, umfassen. Durch die Verwendung von Stahlschalensegmenten mit Dicken von mehr als 45mm in Kombination mit der Konstruktion einer Halbschale kann beispielsweise eine Beschädigung von bereits an der Teilsektion befestigten Einbauten beim Transport oder beim Errichten des Turms reduziert oder vermieden werden.

Die Halbschalenbauweise kann beispielsweise in Bezug auf einen Durchmesser von 5m, und daraus resultierenden Mantelblechstärken sowie Flanschdimensionen im Turmfußbereich, eine hinreichende Steifigkeit (ohne zusätzliche Versteifungselemente) und/oder Formgenauigkeit ermöglichen, so dass sich die Halbschale über die Ankerstange fädeln lässt.

Das Stahlschalensegment 310 mit der Dicke 312 von mehr als 45mm wird beispielsweise im Bereich zum Fundamentanschluss verwendet. Z.B. kann die mehrteilige Turmsektion eine unterste Stahlturmsektion des Turms sein, die mit einem Fundament des Turms oder einer Betonturmsektion verbunden werden soll.

Weitere Einzelheiten und optionale Aspekte der Teilsektion 300 sind in Verbindung mit dem vorgeschlagenen Konzept oder einem oder mehreren der zuvor oder im Folgenden beschriebenen Beispiele beschrieben.

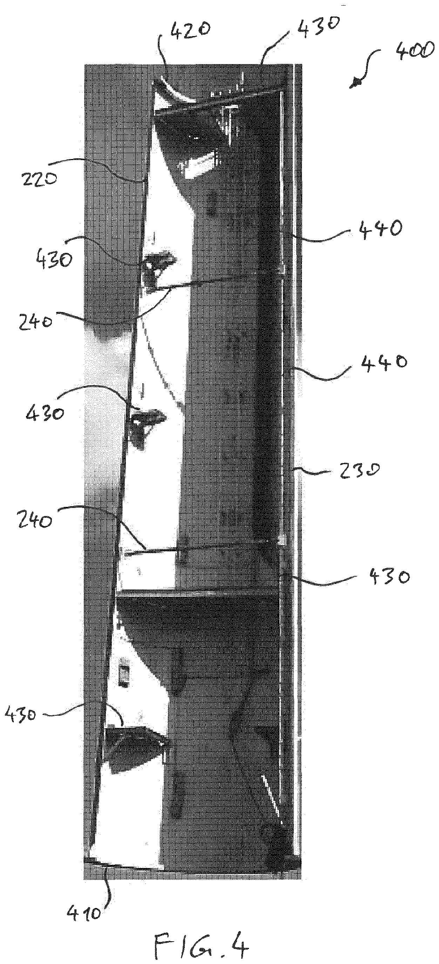

Fig. 4 zeigt eine schematische Darstellung einer Teilsektion gemäß einem Beispiel.

Die Teilsektion 400 kann ähnlich implementiert sein, wie die Teilsektion von Fig. 2. Die Teilsektion 400 umfasst einen unteren Querflansch 410 zum Verbinden mit einem Fundament des Turms oder einer tieferliegenden Turmsektion und einen oberen Querflansch 420 zum Verbinden mit einer höherliegenden Turmsektion. Ferner umfasst die Teilsektion 400 mehrere Verstrebungsstrukturen 240, Plattformen 430 und Aufstiegshilfen in Form von Leitern 440.

Weitere Einzelheiten und optionale Aspekte der Teilsektion 400 sind in Verbindung mit dem vorgeschlagenen Konzept oder einem oder mehreren der zuvor oder im Folgenden beschriebenen Beispiele beschrieben.

Einige Beispiele beziehen sich auf eine Windenergieanlage mit einem Turm mit zumindest einer mehrteiligen Turmsektion mit einer Teilsektion nach einem der zuvor oder nachfolgend beschriebenen Beispiele und/oder ist errichtet nach einem der zuvor oder nachstehend beschriebenen Verfahren zur Errichtung eines Turms.

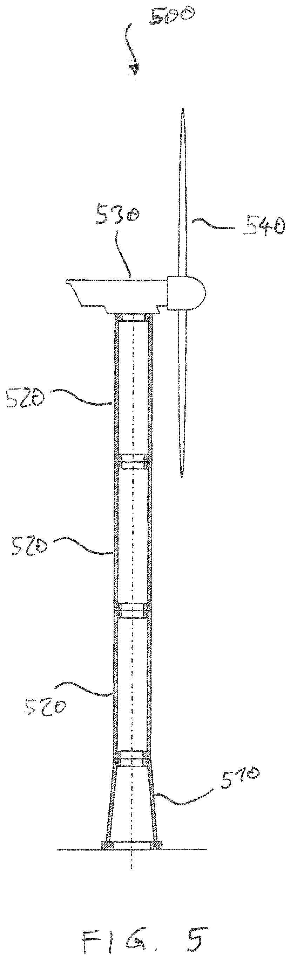

Fig. 5 zeigt einen schematischen Querschnitt einer Windenergieanlage 500 entsprechend einem Beispiel.

Die Windenergieanlage 500 umfasst einen Turm und ein Maschinenhaus 530 mit angeschlossenem Rotor 540. Der Turm umfasst eine hohlkegelstumpfförmige untere Turmsektion 510 und drei hohlzylindrische obere Turmsektion 520. Zumindest die untere Turmsektion 510 umfasst zumindest zwei Teilsektionen, wie sie mit dem beschriebenen Konzept oder in Zusammenhang mit einem oder mehreren der vorhergehend oder nachfolgend beschriebenen Beispiele (z.B. Fig. 1-4) beschrieben wurden.

Einige Beispiele beziehen sich auf eine senkrechte Errichtung von geteilten Sektionen für Windenergieanlagen WEA's.

Gemäß einem nicht beanspruchten Verfahren können die Einzelteile auf der Baustelle zunächst zu einer kompletten Sektion vormontiert und anschließend mittels Kran auf das Fundament gehoben werden. Die Sektionsteile können mittels Längsflanschen und Verschraubungen verbunden werden. Für die Vormontage können somit, je nach Art der Teilung, zusätzliche Vorrichtungen sowie zusätzlicher Platz auf der Baustelle benötigt werden. Darüber hinaus kann während der Vormontage Krankapazität für die Dauer des Zusammenbaus gebunden sein, da die Sektionsteile ausgerichtet und in Position gehalten werden müssen. Das anschließende Errichten der montierten Sektion erfordert in der Regel bereits große Krankapazitäten mit geringen Hakenhöhen, da mit größeren Fußdurchmessern auch die Sektionsgewichte im zusammengebauten Zustand steigen. Um die restlichen Sektionen sowie die Gondel und die Rotorblätter zu montieren kann daher ein Umbau des Kranes auf größere Hakenhöhen notwendig sein. Ein Kranumbau dauert z.B. bis zu 2 Tage.

Durch Verwendung des vorgeschlagenen Konzepts können durch eine senkrechte Errichtung der Einzelteile der geteilten Sektionen neben zusätzlichen Vorrichtungen sowohl kleinere Arbeits- und Kranstellflächen realisiert als auch deutliche Einsparungen in der Errichtungszeit realisiert werden. Beispielsweise kann sich die Errichtungszeit des Turmes von 4 auf 2 Tag reduzieren. Dabei kann zunächst ein Einzelteil mittels Kran auf das Fundament gehoben, ausgerichtet und über die Ankerbolzen fixiert werden. Dazu können spezielle Lastverteilplatten in Höhe der späteren Vergussfuge vorgesehen sein. Anschließend kann das nächste Einzelteile am Kran angeschlagen und ebenfalls auf das Fundament gehoben werden, gegenüber den bereits stehenden Teilen ausgerichtet und auf die Ankerstangen abgelassen werden. Nun kann das Verbinden der auf dem Fundament stehenden Einzelteile über die Längsflansche mittels Schraubenverbindungen erfolgen. Da die Einzelteile über die Ankerstangen mit dem Fundament bereits verbunden sind, kann eine ausreichende Standsicherheit während der Montage der Längsflansche gegeben sein, wodurch Krankapazitäten frei werden. Die zur Montage erforderliche Ausrichtung der Längsflansche kann über die Längsflanschbohrungen mittels Dornen und/oder der Längsflanschpositionierhilfe erfolgen. Während der Montage der Längsflansche kann bereits mit dem Bau der Fundamentvergussfuge begonnen, sowie Treppe, Außenkühler und andere Anbauteile an der ersten Sektion komplettiert werden. Nach dem Verschrauben der Längsflansche kann die Errichtung sofort mit der nächsten Sektion fortgesetzt werden. Auf Grund der Lastverteilbleche können bis zu 3 Sektionen errichtet werden, ohne dass die Fundamentvergussfuge ausgehärtet sein muss. Diese kann z.B. nach 24 Stunden eine Festigkeit erreichen, die es ermöglicht, mit der Errichtung des restlichen Turmes fortzufahren.

Durch das geringere Gewicht der Einzelteile gegenüber der vormontierten Sektion, kann mit einem bereits auf die für die spätere Gondel benötigte Hakenhöhe aufgebauten Kran der gesamte Turm zu errichtet werden, wodurch z.B. 2 Tage für den Kranumbau eingespart werden können. Durch das geringere zu hebende Gewicht kann darüber hinaus auch eine Vorerrichtung mehrerer Sektionen bis zu einer Höhe von ca. 60 m durch einen kleineren, deutlich kostengünstigeren Mobilkran realisiert werden. Hierdurch sind weitere Einsparungen in der Gesamtdauer der Errichtung möglich.

Einige Beispiele beziehen sich auf ein Verfahren zur senkrechten Errichtung von zuvor zwei- oder mehrfach geteilten Turmsektionen in stahlbauweise mit Horizontal- und Längsflanschen, wobei die Teilsektionen einzeln in eine vertikale Position gehoben und über einem Fundament mit Ankerstangen positioniert, ausgerichtet und anschließend so montiert werden, dass die verwendeten Hebezeuge nach der Montage abgeschlagen werden können.

Optional können auf dem Fundament Lastverteilbleche angeordnet werden, welche die Lasteinleitung in das Fundament sowie die Höhe der anschließenden Vergussfuge sicherstellen.

Ferner können die Teilsektionen einzeln in eine vertikale Position gehoben und über einem Fundamentadapter in stahlbauweise positioniert, ausgerichtet und anschließend so montiert werden, dass die verwendeten Hebezeuge nach der Montage abgeschlagen werden können.

Zusätzlich können die Teilsektionen einzeln in eine vertikale Position gehoben und über einer bereits stehenden geteilten oder ungeteilten Turmsektion in stahl- oder betonbauweise positioniert, ausgerichtet und anschließend so montiert werden, dass die verwendeten Hebezeuge nach der Montage abgeschlagen werden können.

Ferner können die zu errichtenden Teilsektionen bereits mit Einbauten vorausgerüstet sein und Teile der Einbauten als Plattformen für die Errichtung genutzt werden.

Optional können die zu errichtenden Teilsektionen mit mindestens einer Verstrebung zur Erhöhung der Formstabilität ausgerüstet sein.

Beispielsweise kann die zu errichtende oder bereits errichtete Teilsektion am oberen Flansch oder in der Nähe des oberen Flansches mit einer Vorrichtung oder Führung ausgerüstet sind, die eine Positionierung und Ausrichtung der Teilsektionen zueinander ermöglicht.

Ferner kann die zu errichtende oder bereits errichtete Teilsektion am unteren Flansch oder in der Nähe des unteren Flansches mit einer Vorrichtung oder Führung ausgerüstet sein, die eine Positionierung und Ausrichtung der Teilsektionen zueinander sowie zum darunterliegendem Bauteil ermöglicht.

Optional können die zu errichtenden Teilsektionen mit selbsttragenden, mit den Teilsektionen fest verbundenen Plattformen für die Montage der Längsflansche ausgerüstet sein. Die Montage der Längsflansche kann z.B. über mobile Plattformen erfolgen.

Zusätzlich können im Längsflanschbereich der zu errichtenden Teilsektionen vor der Errichtung eine Dichtung aufgetragen oder montiert werden.

Optional kann die Ausrichtung der Längsflansche über die Längsflanschbohrungen mittels Längsflanschpositionierhilfe oder Dornen erfolgen.

Ferner kann die zu errichtende oder bereits errichtete Teilsektion am unteren Flansch oder in der Nähe des unteren Flansches mit einer Vorrichtung oder Führung ausgerüstet sein, die eine Positionierung und Ausrichtung der Teilsektionen zueinander sowie zum darunterliegendem Bauteil ermöglicht.

Zusätzlich kann ein Ausrichten der Teilsektionen vor dem Vergießen mittels hydraulischer Stempel erfolgen.

Optional können die Längsstöße der zu errichtenden Teilsektionen gegenüber den Längsstößen der bereits stehenden Turmsektion um mindestens 5° verdreht angeordnet werden. Ferner kann mindestens eine Teilsektion am Boden zumindest temporär abgespannt wird.

Die Sektionsteile können einzeln gehoben und auf das Fundament gestellt werden. Während der Montage der Längsflansche kann der Bau der Vergussfuge sowie das Montieren weiterer Anbauteile und Vorbereitung der nächsten Sektion erfolgen.

Durch die Beschreibung und Zeichnungen werden nur die Grundsätze der Offenbarung dargestellt. Weiterhin sollen alle hier aufgeführten Beispiele grundsätzlich ausdrücklich nur Lehrzwecken dienen, um den Leser beim Verständnis der Grundsätze der Offenbarung und der durch den (die) Erfinder beigetragenen Konzepte zur Weiterentwicklung der Technik zu unterstützen. Alle hiesigen Aussagen über Grundsätze, Aspekte und Beispiele der Offenbarung sowie konkrete Beispiele derselben können deren Entsprechungen umfassen.

In der Beschreibung oder in den Patentansprüchen offenbarte Verfahren können durch ein Bauelement implementiert werden, das ein Mittel zum Ausführen eines jeden der jeweiligen Schritte dieser Verfahren aufweist.

Es versteht sich, dass die Offenbarung mehrerer, in der Beschreibung oder den Ansprüchen offenbarter Schritte, Prozesse, Operationen oder Funktionen nicht als in der bestimmten Reihenfolge befindlich ausgelegt werden soll, sofern dies nicht explizit oder implizit anderweitig, z. B. aus technischen Gründen, angegeben ist. Daher werden diese durch die Offenbarung von mehreren Schritten oder Funktionen nicht auf eine bestimmte Reihenfolge begrenzt, es sei denn, dass diese Schritte oder Funktionen aus technischen Gründen nicht austauschbar sind. Ferner kann bei einigen Beispielen ein einzelner Schritt, Funktion, Prozess oder Operation mehrere Teilschritte, -funktionen, -prozesse oder -operationen einschließen und/oder in dieselben aufgebrochen werden. Solche Teilschritte können eingeschlossen sein und Teil der Offenbarung dieses Einzelschritts sein, sofern sie nicht explizit ausgeschlossen sind.

## Patentansprüche

1. Ein Verfahren (100) zum Errichten eines Turms mit einer mehrteiligen Turmsektion, wobei die mehrteilige Turmsektion zumindest zwei Teilsektionen aufweist, wobei die Teilsektionen kegelstumpfmantelsegmentförmig oder zylindermantelsegmentförmig sind, wobei das Verfahren umfasst:
ein Positionieren (110) einer ersten Teilsektion der mehrteiligen Turmsektion an einer für die erste Teilsektion vorgesehenen Position;
ein Verbinden (120) eines Querflansches der ersten Teilsektion mit einem Fundament des Turms oder einer tieferliegenden Turmsektion;
ein Positionieren (130) einer zweiten Teilsektion der mehrteiligen Turmsektion angrenzend an die erste Teilsektion nach dem Verbinden (120) des Querflansches der ersten Teilsektion;
ein Verbinden (140) eines Längsflansches der ersten Teilsektion mit einem Längsflansch der zweiten Teilsektion nach dem Positionieren (130) der zweiten Teilsektion; **gekennzeichnet durch**
ein Erzeugen einer Mehrzahl von Höhenausgleichstrukturen vor dem Positionieren (110) der ersten Teilsektion, wobei die Höhenausgleichstrukturen voneinander beabstandet über einen Umfang eines Auflagebereichs der mehrteiligen Turmsektion verteilt angeordnet sind.

2. Verfahren gemäß Anspruch 1, wobei das Positionieren (110) der ersten Teilsektion ein Heben der ersten Teilsektion an die vorgesehene Position mit einem Kran umfasst, wobei das Verfahren ferner ein Lösen des Krans von der ersten Teilsektion vor dem Positionieren (130) der zweiten Teilsektion umfasst.

3. Verfahren gemäß Anspruch 2, wobei das Positionieren (130) der zweiten Teilsektion ein Heben der zweiten Teilsektion mit demselben Kran umfasst.

4. Verfahren gemäß Anspruch 2 oder 3, wobei der Kran eine maximale Tragkraft geringer als ein Gewicht der mehrteiligen Turmsektion hat.

5. Verfahren gemäß Anspruch 2, 3 oder 4, wobei der Kran während dem Positionieren (110) der ersten Teilsektion eine maximale Hubhöhe größer als 120m hat, wobei die vorgesehene Position der ersten Teilsektion bei einer Höhe von weniger als 60m liegt.

6. Verfahren gemäß einem der vorhergehenden Ansprüche, ferner umfassend ein temporäres Anbringen einer Positionierhilfsstruktur an einem Querflansch der ersten Teilsektion oder einem Querflansch der zweiten Teilsektion, wobei beim Positionieren (130) der zweiten Teilsektion die zweite Teilsektion auf die erste Teilsektion mit Hilfe der Positionierhilfsstruktur ausgerichtet wird.

7. Verfahren gemäß einem der vorhergehenden Ansprüche, wobei die erste Teilsektion zumindest eine Aufstiegshilfe oder Plattform bereits vor dem Positionieren der ersten Teilsektion aufweist.

8. Verfahren gemäß einem der vorhergehenden Ansprüche, wobei die erste Teilsektion auf einer Teilmenge der Mehrzahl von Höhenausgleichstrukturen positioniert wird und die Teilmenge der Höhenausgleichstrukturen ausgelegt sind, um ein Gewicht von mehr als dem zweifachen eines Gewichts der ersten Teilsektion zu tragen.

9. Verfahren gemäß einem der vorhergehenden Ansprüche, ferner umfassend ein Verfüllen von Spalten zwischen den Höhenausgleichstrukturen nach dem Positionieren (130) der zweiten Teilsektion mit Verfüllmaterial.

10. Verfahren gemäß Anspruch 9, ferner umfassend ein Positionieren zumindest einer Teilsektion einer zweiten Turmsektion oder einer ganzen Turmsektion auf der ersten mehrteiligen Turmsektion während eines Aushärtens des Verfüllmaterials.

11. Verfahren gemäß einem der vorhergehenden Ansprüche, wobei die erste Teilsektion mit dem Fundament des Turms verbunden wird, wobei das Verfahren ferner ein Positionieren einer Tragstruktur für Elektrokomponenten auf dem Fundament umfasst bevor eine letzte Teilsektion der mehrteiligen Turmsektion auf dem Fundament positioniert wird.

12. Verfahren gemäß einem der vorhergehenden Ansprüche, wobei die zweite Teilsektion mit Schräglage neben der ersten Teilsektion vorpositioniert wird und danach die zweite Teilsektion auf die erste Teilsektion ausgerichtet wird.

## Claims

1. A method (100) of erecting a tower having a multi-part tower section, the multi-part tower section having at least two partial sections, the partial sections being frusto-conical shell segment-shaped or cylindrical shell segment-shaped, the method comprising:
positioning (110) a first partial section of the multi-part tower section at a position intended for the first partial section;
connecting (120) a transverse flange of the first partial section to a foundation of the tower or a lower tower section;
positioning (130) a second partial section of the multi-part tower section adjacent to the first partial section after connecting (120) the transverse flange of the first partial section;
connecting (140) a longitudinal flange of the first partial section to a longitudinal flange of the second partial section after positioning (130) of the second partial section; **characterized by**
creating a plurality of height compensating structures prior to positioning (110) the first partial section, the height compensating structures being spaced apart from one another and arranged around a circumference of a support area of the multi-part tower section.

2. The method of claim 1, wherein positioning (110) the first partial section comprises lifting the first partial section to the intended position with a crane, the method further comprising releasing the crane from the first partial section prior to positioning (130) the second partial section.

3. The method of claim 2, wherein positioning (130) the second partial section comprises lifting the second partial section with the same crane.

4. The method of claim 2 or 3, wherein the crane has a maximum lifting capacity less than a weight of the multi-part tower section.

5. The method of claim 2, 3 or 4, wherein the crane has a maximum lift height greater than 120m during positioning (110) the first partial section, wherein the intended position of the first partial section is at a height of less than 60m.

6. The method of any one of the preceding claims, further comprising temporarily attaching a positioning aid structure to a transverse flange of the first partial section or a transverse flange of the second partial section, wherein, when positioning (130) the second partial section, the second partial section is aligned with the first partial section using the positioning aid structure.

7. The method of any one of the preceding claims, wherein the first partial section comprises at least one ascending aid or platform already prior to positioning the first partial section.

8. The method of any one of the preceding claims, wherein the first partial section is positioned on a subset of the plurality of height compensating structures, and the subset of height compensating structures is configured to support a weight of more than twice a weight of the first partial section.

9. The method of any one of the preceding claims, further comprising backfilling gaps between the height compensating structures after positioning (130) the second partial section with backfill material.

10. The method of claim 9, further comprising positioning at least one partial section of a second tower section or an entire tower section on the first multi-part tower section during curing the backfill material.

11. The method of any one of the preceding claims, wherein the first partial section is connected to the foundation of the tower, the method further comprising positioning a support structure for electrical components on the foundation prior to positioning a final partial section of the multi-part tower section on the foundation.

12. The method of any one of the preceding claims, wherein the second partial section is pre-positioned in an inclined position next to the first partial section and thereafter the second partial section is aligned with the first partial section.

## Revendications

1. Procédé (100) pour construire une tour ayant une section de tour en plusieurs parties, la section de tour en plusieurs parties ayant au moins deux sections partielles, les sections partielles étant en forme de segment d'enveloppe tronconique ou en forme de segment d'enveloppe cylindrique, le procédé comprenant le fait de :
positionner (110) une première section partielle de la section de tour en plusieurs parties à une position prévue pour la première section partielle ;
connecter (120) une bride transversale de la première section partielle à une fondation de la tour ou à une section de tour inférieure ;
positionner (130) une deuxième section partielle de la section de tour en plusieurs parties adjacente à la première section partielle après le fait de connecter (120) la bride transversale de la première section partielle ;
connecter (140) une bride longitudinale de la première section partielle à une bride longitudinale de la deuxième section partielle après le fait de positionner (130) la deuxième section partielle ; **caractérisé par** le fait de
créer une pluralité de structures de compensation de hauteur avant le fait de positionner (110) la première section partielle, les structures de compensation de hauteur étant espacées les unes des autres et réparties sur une périphérie d'une zone de support de la section de tour en plusieurs parties.

2. Procédé selon la revendication 1, dans lequel le fait de positionner (110) la première section partielle comprend le fait de lever la première section partielle à la position prévue au moyen d'une grue, le procédé comprenant en outre le fait de dégager la grue de la première section partielle avant le fait de positionner (130) la deuxième section partielle.

3. Procédé selon la revendication 2, dans lequel le fait de positionner (130) la deuxième section partielle comprend le fait de lever la deuxième section partielle au moyen de la même grue.

4. Procédé selon la revendication 2 ou 3, dans lequel la grue a une capacité de charge maximale inférieure à un poids de la section de tour en plusieurs parties.

5. Procédé selon la revendication 2, 3 ou 4, dans lequel la grue a une hauteur de levage maximale supérieure à 120 m pendant le fait de positionner (110) la première section partielle, la position prévue de la première section partielle étant à une hauteur inférieure à 60 m.

6. Procédé selon l'une des revendications précédentes, comprenant en outre le fait de fixer temporairement une structure d'aide au positionnement sur une bride transversale de la première section partielle ou sur une bride transversale de la deuxième section partielle, dans lequel, lors du positionnement (130) de la deuxième section partielle, la deuxième section partielle est alignée sur la première section partielle à l'aide de la structure d'aide au positionnement.

7. Procédé selon l'une des revendications précédentes, dans lequel la première section partielle comprend au moins une aide à la montée ou une plate-forme déjà avant le fait de positionner la première section partielle.

8. Procédé selon l'une des revendications précédentes, dans lequel la première section partielle est positionnée sur un sous-ensemble de la pluralité de structures de compensation de hauteur, et le sous-ensemble des structures de compensation de hauteur est configuré pour supporter un poids supérieur à deux fois un poids de la première section partielle.

9. Procédé selon l'une des revendications précédentes, comprenant en outre le fait de remplir des espaces entre les structures de compensation de hauteur après le fait de positionner (130) la deuxième section partielle avec un matériau de remplissage.

10. Procédé selon la revendication 9, comprenant en outre le fait de positionner au moins une section partielle d'une deuxième section de tour ou d'une section de tour entière sur la première section de tour en plusieurs parties pendant un durcissement du matériau de remplissage.

11. Procédé selon l'une des revendications précédentes, dans lequel la première section partielle est connecté à la fondation de la tour, le procédé comprenant en outre le fait de positionner une structure de support pour des composants électriques sur la fondation avant qu'une dernière section partielle de la section de tour en plusieurs parties soit positionnée sur la fondation.

12. Procédé selon l'une des revendications précédentes, dans lequel la deuxième section partielle est prépositionnée avec une position inclinée à côté de la première section partielle, et ensuite la deuxième section partielle est alignée sur la première section partielle.
